(19) Europäisches Patentamt

European Patent Office

Office européen des brevets

(11) **EP 1 252 744 B1**

(12) **FASCICULE DE BREVET EUROPEEN**

(45) Date de publication et mention
de la délivrance du brevet:
**08.09.2004 Bulletin 2004/37**

(21) Numéro de dépôt: **01904041.9**

(22) Date de dépôt: **02.02.2001**

(51) Int Cl.⁷: **H04L 12/56**, H04Q 11/04

(86) Numéro de dépôt international:
**PCT/FR2001/000324**

(87) Numéro de publication internationale:
**WO 2001/058094 (09.08.2001 Gazette 2001/32)**

(54) **PROCEDE D'OPTIMISATION DYNAMIQUE DE LA QUALITE DE SERVICE DANS UN RESEAU DE TRANSMISSION DE DONNEES**

VERFAHREN ZUR DYNAMISCHEN OPTIMISIERUNG DER DIENSTQUALITÄT IN EINEM DATENÜBERTRAGUNGSNETZWERK

METHOD FOR DYNAMIC OPTIMISATION OF SERVICE QUALITY IN A DATA TRANSMISSION NETWORK

(84) Etats contractants désignés:
**AT BE CH CY DE DK ES FI FR GB GR IE IT LI LU MC NL PT SE TR**

(30) Priorité: **03.02.2000 FR 0001360**

(43) Date de publication de la demande:
**30.10.2002 Bulletin 2002/44**

(73) Titulaire: **Ipanema Technologies S.A.
92130 Issy-Les-Moulineaux (FR)**

(72) Inventeurs:
• **GRENOT, Thierry
F-92140 Clamart (FR)**
• **LECERF, François
F-92310 Sevres (FR)**
• **LECLERC, Jean-Yves
F-75006 Paris (FR)**

(74) Mandataire: **Brykman, Georges et al
c/o Brevalex
3, rue du Docteur Lancereaux
75008 Paris (FR)**

(56) Documents cités:
**US-A- 5 359 593**

## Description

La présente invention concerne un procédé et un dispositif d'optimisation dynamique de la qualité de service dans un réseau de transmission de données en mode paquet, ledit réseau comportant une pluralité de sources Si et une pluralité de destinations Di reliées à un réseau de transit via une pluralité de réseaux d'accès , chaque source étant susceptible d'envoyer un débit maximal $L_{max,s,x}$, et chaque destination étant susceptible de recevoir un débit maximal $L_{max,x,d}$, lesdites sources comportant chacune un moyen de classification et de contrôle du débit de données émis.

Ce procédé et ce dispositif peuvent être mis en oeuvre quelle que soit l'étendue géographique du réseau, quel que soit le débit acheminé par celui-ci et quel que soit le nombre d'usagers de ce réseau.

Les réseaux de télécommunication en mode paquet se caractérisent par le fait que les informations acheminées sont véhiculées en groupes appelés paquets, essentiellement constitués :

- d'un en-tête contenant les informations pour l'acheminement du paquet dans le réseau ;
- des données à transmettre.

Un exemple d'un tel réseau est divulgué par US 5 359 593.

Les informations d'adressage contenues dans les en-têtes permettent d'identifier des flux d'information entre les applications finales. Ces paquets sont véhiculés à travers le réseau, et empruntent au gré de ce réseau des moyens de transmission et de commutation les plus variés.

La technologie principalement utilisée actuellement pour ces réseaux de télécommunication en mode de paquet est le protocole IP (Internet Protocol). Ce protocole est utilisé de bout en bout, et peut être véhiculé sur des réseaux de transmission très divers.

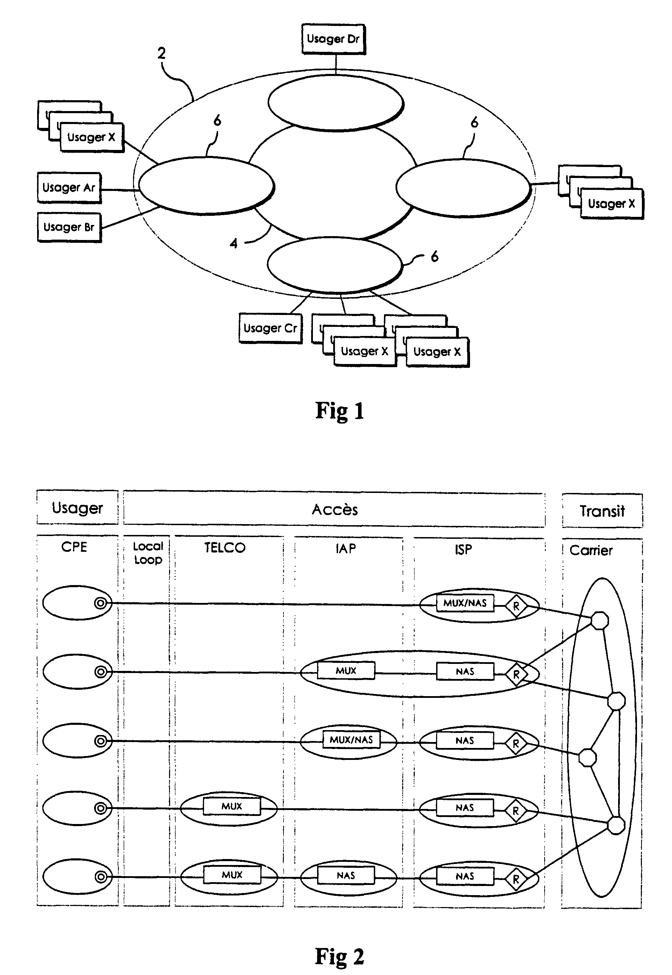

La figure 1 donne un exemple d'un tel réseau.

Les usagers peuvent être soit des usagers individuels, soit des agences, des entreprises (ayant leur propre réseau local interne), etc.

Le réseau de transit représente la partie centrale, généralement à grande capacité et couvrant un large territoire (le monde entier dans le cas du réseau Internet). Ce réseau est généralement partagé par une multitude d'usagers et/ou de réseaux privés.

Les réseaux d'accès sont généralement à débit moyen ou lent, et partagés entre des usagers localisés dans une zone géographique limitée. La « boucle locale », lien filaire, optique, radio, etc. entre l'usager et le fournisseur du service d'accès est considérée par la suite comme faisant partie du réseau d'accès.

La figure 2 montre différents cas possibles de réseaux d'accès. Les conventions d'écriture sont les suivantes :

- Pour les réseaux :

    Carrier (en langue anglaise) : transporteur de grandes quantités d'information sur de longues distance ; il réalise aussi l'interconnexion avec d'autres carriers, permettant ainsi dans le cas du réseau Internet une interopérabilité entre les usagers des différents fournisseurs de service Internet ISP (Internet Service Provider en langue anglaise).
    IAP : (Internet Access Provider en langue anglaise) fournisseur d'accès au réseau ; il collecte le trafic pour le compte de l'ISP, ce dernier fournit typiquement à ses usagers divers serveurs d'authentification, d'hébergement de site Web, de tarification, de messagerie, etc. ainsi que l'accès au réseau de transit.
    Local Loop : ( Boucle locale en langue anglaise) liaison (filaire, optique, radio, ...) reliant l'usager au réseau.
    TELCO : opérateur téléphonique, souvent propriétaire de la boucle locale.

- Pour les équipements :

    CPE : (Customer Premices Equipment en langue anglaise) équipement d'usager connecté au réseau (en général un routeur d'accès).
    MUX : multiplexeur/démultiplexeur (il y en a de nombreuses sortes : téléphonique, xDSL, SDH, etc....).
    NAS : (Network Access Server, en langue anglaise) serveur d'accès au réseau ; ce peut être aussi un routeur d'accès.
    R : Routeur (ou commutateur).

On peut voir qu'il y a de très nombreuses configurations possibles. Chacun des équipements (CPE, MUX, NAS, R, ...) correspond à une fonction de concentration de trafic et de mise en commun de ressources de télécommunication.

Avec le développement prodigieux des échanges d'informations à travers les réseaux de télécommunication, il devient essentiel pour les opérateurs d'assurer une qualité de service à leur clients. La Qualité de Service est constituée par l'ensemble des caractéristiques pertinentes affectant le transfert des informations entre deux points donnés d'un réseau. On trouve en particulier :

- qualité de l'accès au service :

    - la disponibilité du service ;
    - le temps de remise en service en cas de défaillance.

- qualité du service de transfert d'information :

- le délai de transfert des informations entre la source et la destination ;
- la variation du délai de transfert des informations (la gigue) ;
- la dégradation des informations véhiculées (pertes, erreurs).

Un problème majeur provient du fait que l'étendue géographique, la forte mutualisation des équipements d'infrastructure entre de très nombreux usagers, la variété des flux échangés et la complexité des architectures déployées rend très difficile la prédiction et la garantie de la Qualité de Service sur de tels réseaux. Le débit qu'il est possible d'écouler entre deux usagers donnés, le délai de transfert des informations, la variation dans de temps de ce délai (la gigue) et le taux de perte associé sont des éléments fondamentaux de cette Qualité de Service. Seule leur maîtrise permet de déployer des services professionnels critiques (transport de la voix, des images, des données critiques, commerce électronique, etc....).

Une façon courante d'améliorer la qualité du service est de sur-dimensionner la capacité du réseau. Cependant, étant donné l'importance du coût d'investissement et d'utilisation de ces réseaux, on souhaite utiliser ces réseaux au maximum, et une telle solution très onéreuse est donc d'usage limité.

Des dispositifs (protocoles, équipements de transmission, de commutation, de routage, etc.), dépendants de la nature des différents réseaux, peuvent être mis en oeuvre pour gérer ces éléments de Qualité de Service. Ils sont en général basés sur des mécanismes de priorité et de réservation de ressources à la demande (ATM, RSVP sur IP, ...) ou à la configuration (ATM, Diff-Serv sur IP, ...). Ces dispositifs ont en général une portée limitée à une partie du réseau seulement. En constante mutation, ils inter-opèrent difficilement.

Dans tous les cas, le résultat est fortement dépendant du comportement des usagers source : débit d'émission, régularité du trafic, matrice de trafic, etc.... Ce comportement est très difficile à prévoir, du fait de la grande variété des applications utilisant les réseaux (transport de la voix, d'images, transfert de fichier, consultation de bases de données, etc....), de la multiplicité des usagers mis en présence et de la large panoplie de leurs besoins.

Dans tous les cas également, le résultat est fortement dépendant des règles d'ingénierie et de la configuration des multiples paramètres du réseau. Ces règles sont très difficiles à déterminer, en particulier à cause de la taille des réseaux, de la grande variété des technologies mises en oeuvre à un moment donné (parc non homogène) et de la multiplicité des organisations (opérateurs d'accès au service, opérateurs de points de présence, transporteurs longue distance, etc.) impliquées d'un bout à l'autre du chemin.

Par ailleurs, la Qualité de Service est principalement liée à la congestion des différents éléments du réseau empruntés par les informations pendant leur transfert. Bien qu'il existe une infinité de gradation, on peut schématiser les cas de fonctionnements rencontrés par ces deux modes :

- soit il n'y a aucune réservation de ressource, et le réseau fait au mieux pour relayer les informations jusqu'au destinataire ;
- soit il y a une réservation de ressource, et la quantité d'information injectée dans le réseau est plus ou moins statistiquement contrôlé.

Dans tous les cas, des systèmes de stockage temporaire en file d'attente (mémoires), situés à chaque point de multiplexage, de concentration ou de commutation, permettent de traiter les simultanéités d'arrivée des paquets. Le taux instantané d'occupation mémoire rencontré par un paquet et la politique de gestion (priorité, nombre de files d'attente, règle de vidage, rejet, ...) mise en oeuvre au niveau de chaque file d'attente déterminent le temps passé par un paquet dans ce dispositif, ainsi que son éventuel rejet.

Le délai de transfert entre deux points du réseau est dû :

- à la somme des temps de traversée des lignes, câbles, fibres optiques, liens satellites, etc. utilisés ; ce délai est en général fixe, et pour l'essentiel dépend du média et de la distance parcourue par l'information.
- à la somme des temps de traversée des files d'attente dans les différents équipements ; ce délai est dû globalement à la charge instantanée rencontrée par chaque paquet et aux politiques de gestion de ces files d'attente. Une charge instantanée trop forte provoque un rejet du paquet d'information (perte) ; c'est ce phénomène qui explique la perte des paquets.

Ce délai de transfert est donc sensible à la charge instantanée, aux variations « saisonnières » (cycles jour/nuit, heures de pointe, etc.), aux changements de configuration (chemins empruntés dans le réseau, etc.). La variation du délai de transfert est couramment de l'ordre de (voire bien supérieure à) sa valeur moyenne, que ce soit à court terme (congestion instantanée) qu'à long terme (cycle d'activité des usagers).

Une analyse plus détaillée de ces phénomènes de congestion permet de segmenter le problème. En examinant à rebours le chemin parcouru par un paquet, on peut se ramener aux trois segments suivants :

- délai, variation de délai et pertes dus à la charge du réseau d'accès vers un usager donné : le réseau d'accès est en général plus lent que le réseau de transit ; la somme des flux en direction de cet usager peut donc excéder la capacité de ce réseau. Le comportement est ici lié essentiellement aux comportement des sources générant des paquets vers l'usager considéré.

- délai, variation de délai et pertes dus à la charge du réseau de transit sont à mettre sur le compte de la résultante du comportement d'une multitude de sources. Il n'est que peu corrélé avec le trafic à destination d'un usager donné. On peut voir le réseau de transit comme un milieu de propagation dont les caractéristiques (délai, variation du délai, pertes) sont 1) lentement variables relativement aux périodes d'émission des paquets, et 2) indépendantes de l'émission des paquets d'une source donnée.
- délai, variation de délai et pertes dus à la charge du réseau d'accès d'un usager (vers le réseau de transit) sont notamment liés à la quantité d'information émise par l'usager considéré.

Une méthode connue de contrôle de congestion dans les réseaux de télécommunication en mode paquet est décrite dans le brevet américain US 5,936,940 (Adaptive rate-based congestion control in packet networks). Le principe proposé dans ce brevet est illustré par la figure 3 et consiste à différentier le « délai réseau » qui représente le délai à vide (lignes de transmission, etc.) et le « délai de file d'attente » qui dépend du trafic injecté et est représentatif de l'état de congestion du système. Des paquets de test sont horodatés relativement aux heures locales lors de leur émission et de leur réception. L'estimation du « délai de file d'attente » est basée sur la différence des intervalles inter-arrivée et inter-départ séparant des paquets de test consécutifs.

La formule d'estimation récurrente et son bornage inférieur à zéro permet de s'affranchir du délai minimum rencontré, qui représente la partie fixe du délai, le « délai réseau ». Cette information « absolue » est utilisée pour asservir les sources. Le « délai de file d'attente » estimé sert alors d'indicateur pour classer l'état du réseau en quelques catégories. Selon l'état du réseau, un limiteur de sortie sur la source est modulé avec une fonction non linéaire.

Un inconvénient de cette méthode provient du fait qu' elle soit basée sur des mesures relatives, donnant une idée de la variation de la congestion, mais ne permettant pas de connaître la gravité de cette congestion. Ceci rend très mal aisé une réelle optimisation. De plus il se pose des problèmes d'initialisation des dispositifs. En outre, ces mesures partielles ou indirectes ne donnent qu'une vue parcellaire de la situation du réseau observé et ne sont pas reliées à des objectifs quantifiables de la Qualité de Service perçue par les usagers du réseau. Par ailleurs, dans les réseaux modernes, les paquets de test ne sont pas représentatifs des paquets utiles en raison de la grande variétés de chemins, notamment dans les dispositifs de mise en file d'attente. Aussi, l'injection de paquets de test ne permet-elle pas un nombre suffisant de mesure et peut même générer une charge exagérée. Notons par ailleurs que les mécanismes proposés supposent que toutes les sources du réseau ont un comportement identique, ce qui n'est pas le cas dans de grands réseaux déjà déployés.

L'objet de l'invention est un procédé et un dispositif permettant d'optimiser l'usage et la Qualité de Service des réseaux en mode paquet, plus particulièrement, les réseaux fonctionnant sur le protocole IP.

Un autre objet de cette invention est un procédé et un dispositif permettant de gérer dynamiquement la congestion du réseau d'accès en arrivée vers un usager, et particulièrement, quand le point de congestion sur ce réseau d'accès n'est pas situé sur la ligne d'accès elle-même, et quand le niveau de congestion varie dans le temps. La gestion de cette congestion permettant d'augmenter la charge tout en maîtrisant les délais, la gigue et les pertes.

Un autre objet de cette invention est un procédé et un dispositif permettant de gérer dynamiquement la congestion du réseau d'accès en départ d'un usager, et particulièrement (mais pas seulement) quand le point de congestion sur ce réseau d'accès n'est pas situé sur la ligne d'accès elle-même, et quand le niveau de congestion varie dans le temps. La gestion de cette congestion permet d'augmenter la charge tout en maîtrisant les délais, la gigue et les pertes.

Un autre objet de cette invention est un procédé et un dispositif permettant de gérer dynamiquement la congestion du réseau de transit, et quand le niveau de congestion varie dans le temps. La gestion de cette congestion permettant d'utiliser à bon escient d'autres moyens de télécommunications.

Pour atteindre ces buts, le procédé selon l'invention comporte les étapes suivantes :

a- mesurer le délai absolu de transfert, la gigue, le débit desdites données échangées et les pertes entre chaque source S et chaque destination D, et effectuer les sous-étapes suivantes en fonction des mesures obtenues à cette étape a:

a1- pour chaque destination D, répartir le débit maximal $L_{max,x,d}$ entre les différentes sources ;
a2- pour chaque destination D, déterminer dynamiquement la limite du point de congestion du réseau d'accès optimisant le débit maximal $L_{max,x,d}$;
a3- pour chaque source S, déterminer dynamiquement à partir des mesures obtenues à l'étape a, la limite du point de congestion du réseau d'accès optimisant le débit maximal global $L_{max,s,x}$ et le débit maximal vers chaque destination $L_{max,s,d}$ ;
a4- pour chaque source S, déterminer l'effet de la congestion du réseau de transit ; et

b- commander les moyens de classification et de contrôle de débit en fonction des résultats des sous-étapes a1, a2, a3 et a4.

Préférentiellement, l'étape a1 comporte les opérations suivantes:

- fixer le débit $L_{max,x,d}$ à partir, d'une part, du débit de la ligne d'accès, et d'autre part, de l'étape a2 ;
- partager ledit débit maximal $L_{max,x,d}$ entre les sources actives du sous-réseau de manière à définir pour chaque source une première valeur de débit maximal $L_{max,s,d}$, ledit partage étant effectué en tenant compte de données de configurations et d'éventuelles réservations dynamiques de débit $R_{s,d}$ par tout ou partie des sources.
- transmettre vers chacune des sources ladite première valeur $L_{max,s,d}$.

L'étape a2 comporte les opérations suivantes:

- Calculer une première valeur de délai représentant une pondération de délai entre chacune des sources et ladite destination;
- Calculer une première valeur de gigue représentant une pondération de gigue entre chacune des sources et ladite destination ;
- Calculer une première valeur de pertes représentant une pondération des pertes entre chacune des sources et ladite destination ;
- déterminer la courbe de ces valeurs pondérées en fonction du débit reçu par cette destination ;
- Fixer une valeur de débit maximal $L_{max,x,d}$ en fonction desdites courbes.

L'étape a3 comporte les opérations suivantes:

- Calculer une première valeur de délai représentant une pondération de délai entre ladite source et chacune desdites destinations;
- Calculer une première valeur de gigue représentant une pondération de gigue entre ladite source et chacune desdites destinations ;
- Calculer une première valeur de pertes représentant une pondération des pertes entre ladite source et chacune desdites destinations ;
- déterminer la courbe de ces valeurs pondérées en fonction du débit émis par ladite source (globalement et vers chacune des destinations) ;
- Fixer une valeur de débit global maximal $L_{max,s,x}$ et une deuxième valeur de débit maximal par direction $L_{max,s,d}$ en fonction desdites courbes.

L'étape a4 comporte les opérations suivantes:

- comparer les mesures de lélai, gigue, pertes et débit, et les résultats des étapes a1, a2 et a3 à des valeurs de délai, gigue, pertes et débit prédéfinies ;
- établir un diagnostic sur la qualité de service en fonction de cette comparaison.

Selon une deuxième caractéristique de l'invention, le procédé comporte en outre une étape consistant à transmettre au moyen de contrôle du débit, la plus petite valeur parmi lesdites première et deuxième valeurs de débit maximal $L_{max,s,d}$.

Ce procédé est mis en oeuvre par un dispositif comportant:

- des moyens pour mesurer le délai absolu de transfert, la gigue, le débit des données échangées et les pertes entre chaque source S et chaque destination D;
- des moyens pour répartir, pour chaque destination D, le débit maximal $L_{max,x,d}$ entre les différentes sources ;
- des moyens pour déterminer dynamiquement, pour chaque destination D, la limite du point de congestion du réseau d'accès optimisant le débit maximal $L_{max,x,d}$ ;
- des moyens pour déterminer dynamiquement pour chaque source S, la limite du point de congestion du réseau d'accès globalement et vers chaque destination ;
- des noyens pour déterminer, pour chaque source S, l'effet de la congestion du réseau de transit vers chaque destination ;
- des moyens de classification et de contrôle du débit ; et
- des moyens pour commander les moyens de contrôle de débit.

Préférentiellement, ledit dispositif comporte en outre un module M1, chargé de déterminer dynamiquement une première quantité maximale d'information $L_{max,s,d}$ qu'une source S peut envoyer vers une destination D, un module M2, chargé de déterminer dynamiquement le débit maximum global $L_{max,x,d}$ que la destination D peut recevoir pour avoir une utilisation optimale de la ligne d'accès tout en maîtrisant la Qualité de Service , un module M3, chargé de déterminer dynamiquement le débit maximum global et par destination que la source S peut émettre pour avoir une utilisation optimale de la ligne d'accès tout en maîtrisant la Qualité de Service, un module M4, chargé de déterminer dynamiquement les caractéristiques du réseau de transit et de commander un sélectionneur de réseau et un module M5, fixant dynamiquement la valeur de limiteurs de la source S en fonction des valeurs issues des modules M1 et M3.

Les paramètres du module M1 sont :

- les mesures de débit ;
- la valeur maximale $L_{max,x,d}$ que la destination D peut recevoir de l'ensemble des sources Si, telle que déterminée par le module M2 ;
- d'éventuelles réservations de débit $R_{s,d}$ entre chaque source S et la destination D.

Le module M2 calcule, à partir des mesures de Qualité de Service, des variables de Qualité de Service pondérées entre toutes les sources Si et fournit le débit maximum $L_{max,x,d}$ que la destination D peut recevoir du réseau.

Le module M3 calcule, à partir des mesures de Qualité de Service, des variables de Qualité de Service pondérées entre toutes les destinations Di et fournit le débit maximum que la source S peut émettre vers le réseau et le débit maximum que la source S peut émettre vers chaque destination $D_i$.

Le module M4 établit un diagnostic sur la qualité de service entre la source S et chaque destination Di de manière à commander le sélectionneur pour orienter tout ou partie du trafic vers un autre réseau.

Grâce à ce procédé et au dispositif selon l'invention, on obtient les avantages suivants :

- une adaptation dynamique aux variations des caractéristiques de Qualité de Service des réseaux de transit, d'accès entrant et d'accès sortant ;
- une adaptation dynamique sur divers critères de qualité tels le délai, la gigue et les pertes. Les combinaisons de critères sont également possibles ;
- l'ensemble des usagers des réseaux utilisés n'a pas besoin d'obéir aux mêmes mécanismes. Ce point facilite l'introduction et l'utilisation du dispositif dans des réseaux déjà déployés ;
- une maximisation dynamique du débit dans des limites absolues et exactes (et non seulement relatives) de temps de transit, de gigue et de pertes ;
- une maximisation dynamique de la qualité de service (minimisation du délai, gigue et pertes) dans des limites absolues et exactes pour un débit donné ;
- une optimisation dynamique de la combinaison (Qualité de Service ; débit) en fonction de critères adaptés à chaque flux d'usager ;
- une utilisation optimisée de plusieurs réseaux, en fonction de la charge présentée, de la qualité de service effective, des prix constatés, de l'objectif de qualité de service, et des objectifs de prix (choix du réseau, choix du type de service offert, etc.).

D'autres particularités et avantages de cette invention apparaîtront clairement à travers la description qui suit, prise à titre d'exemple non limitatif, en référence aux figures annexées :

- la figure 1, représente un schéma général d'un réseau de transmission dans lequel est mis en oeuvre le procédé selon l'invention ;
- la figure 2 représente différents cas possibles de réseaux d'accès ;
- la figures 3 illustre une méthode de calcul du délai de file d'attente selon l'art antérieur ;
- la figure 4 représente schématiquement une courbe d'optimisation de la qualité de service selon l'invention ;

- la figure 5 représente schématiquement un réseau dans lequel est mis en oeuvre un dispositif selon l'invention ;
- la figure 6 représente un exemple particulier de courbes d'optimisation selon l'invention ;
- la figure 7 représente schématiquement des limiteurs de trafics équipant le dispositif selon l'invention.

Dans la suite de la description, on appellera :

$MRTT_{sd}$ : la valeur moyenne du délai aller-retour pour un couple SD d'usagers.
$L_{max,s,d}$ : valeur limite maximale du débit d'une source S vers une destination D.
$L_{max,s,x}$ : valeur limite maximale du débit d'une source S, toutes destinations confondues.
$L_{max,x,d}$ : valeur limite maximale du débit total vers une destination D, toutes sources confondues.
$D_{s,d}$ : débit réel d'une source S vers la destination D.
$D_{x,d}$ : débit réel total vers la destination D, toutes sources confondues.
$D_{s,x}$ : débit réel total émis par la source S, toutes destinations confondues.
$R_{s,d}$ : réservation de débit entre la source S et la destination D.

Procédé d'optimisation dynamique de la qualité de service dans un réseau de transmission de données 2 en mode paquet, ledit réseau comportant une pluralité de sources Si et une pluralité de destinations Di reliées à un réseau de transit 4 via une pluralité de réseaux d'accès 6, chaque source étant susceptible d'envoyer un débit maximal $L_{max,s,x}$, et chaque destination étant susceptible de recevoir un débit maximal $L_{max,x,d}$, lesdites sources comportant chacune un moyen de classification 8 et de contrôle 10 du débit de données émis.

Les éléments de Qualité de Service (débit, délais, gigue, perte) ont leur origine notamment dans la congestion des diverses parties du réseau 2. On regroupe ces phénomènes dans 3 catégories :

Catégorie C1 : Les caractéristiques collectives. On regroupe dans cette catégorie les phénomènes dus à l'activité conjointe des sources du sous-réseau. Il s'agit particulièrement, mais pas uniquement de la congestion à l'accès sortant vers les destinations.
Catégorie C2 : les caractéristiques individuelles. On regroupe dans cette catégorie les phénomènes dus à l'activité de chaque source, indépendamment des autres. Il s'agit particulièrement, mais pas uniquement de la congestion à l'accès entrant dans le réseau.
Catégorie C3 : les caractéristiques du milieu. Le réseau de transit 4 est vu comme un milieu de propagation dont les caractéristiques évoluent relativement lentement, et relativement indépendamment de l'activité des sources du sous-réseau.

Le procédé proposé repose sur les points suivants :

- utilisation de mesures précises, nombreuses et absolues ;
- le réseau considéré n'a pas besoin d'être homogène ;
- une segmentation du délai en différentes parties, et
- des mécanismes de contrôle et d'optimisation utilisant ces mesures segmentées.

Dans un mode préféré de réalisation, le procédé selon l'invention comporte les étapes suivantes :

a- mesurer le délai absolu de transfert, la gigue, le débit desdites données échangées et les pertes entre chaque source S et chaque destination D, et effectuer les sous-étapes suivantes en fonction des mesures obtenues à cette étape a:

a1- pour chaque destination D, répartir le débit maximal $L_{max,x,d}$ entre les différentes sources ;
a2- pour chaque destination D, déterminer dynamiquement la limite du point de congestion du réseau d'accès 6 optimisant le débit maximal $L_{max,x,d}$;
a3- pour chaque source S, déterminer dynamiquement à partir des mesures obtenues à l'étape a, la limite du point de congestion du réseau d'accès 6 optimisant le débit maximal global $L_{max,s,x}$ et le débit maximal vers chaque destination $L_{max,s,d}$ ;
a4- pour chaque source S, déterminer l'effet de la congestion du réseau de transit 4; et

b- commander les moyens de classification 8 et de contrôle 10 de débit en fonction des résultats des sous-étapes a1, a2, a3 et a4.

Un module M1 12 a pour objet de limiter le trafic vers une source donnée de façon à contrôler la congestion collective et le partage de l'accès entre les sources du sous-réseau.

Pour une destination D donnée, une limite $L_{max,x,d}$ est fixée à partir :

- du débit de la ligne d'accès ($L_{max,x,d}$ <= débit de la ligne d'accès) ;
- du module M2 14, qui recherche la meilleure valeur courante de $L_{max,x,d}$ ;
- de paramètres de configuration.

Ce débit $L_{max,x,d}$ doit être partagé entre les sources actives du sous-réseau. Pour ce faire, le module M1 peut utiliser :

- une mesure locale instantanée des débits $D_{s,d}$ pour chacune des sources ;
- des réservations dynamiques de débit $R_{s,d}$ effectuées par tout ou partie des sources;
- des données statiques de configuration (par exemple le débit de la ligne d'accès, une limite fixée par abonnement avec l'opérateur du réseau d'accès, une pondération a priori, etc.).

Un principe possible consiste pour la destination D à communiquer à chacune des sources une première valeur $L_{max,s,d}$ que la source S ne peut excéder pour envoyer des informations à la destination D (programmation d'un limiteur 10).

Préférentiellement, pour une destination D donnée, le module de contrôle M1 12 comporte les étapes suivantes :

- fixer une limite $L_{max,x,d}$ à partir, d'une part, du débit de la ligne d'accès, et d'autre part, du module M2 14;
- partager la limite $L_{max,x,d}$ entre les sources actives du sous-réseau selon les mesures locales et instantanées des débits $D_{s,d}$ pour chacune des sources, les réservations dynamiques de débit $R_{s,d}$ effectuées par tout ou partie des sources, les données statiques de configuration ;
- transmettre à chaque source S la première valeur limite $L_{max,s,d}$ de débit vers la destination D.

Si à un moment donné, ou par construction du réseau d'accès 6, le point de congestion collectif vers la destination D n'est pas la ligne d'accès dudit réseau d'accès 6, le débit maximum utilisable est inférieur à celui de la ligne d'accès à la destination D. De plus, dans ce cas, il y a de fortes chances que ce débit maximum soit variable dans le temps, par exemple parce qu'il est dû à un étage de concentration dans lequel d'autres sources n'appartenant pas au sous-réseau interviennent.

Il est donc nécessaire de trouver et d'adapter dynamiquement la limite $L_{max,x,d}$ à utiliser par le module M1 12. C'est la fonction du module M2 14, mis en oeuvre dans chacune des destinations.

Le principe de la découverte de cette limite consiste à considérer la relation :

QUALITE DE SERVICE = F(CHARGE COLLECTIVE).

Une charge trop importante conduit à une dégradation des paramètres de Qualité de Service (délai, gigue, pertes). Une charge trop faible conduit à une mauvaise utilisation du réseau d'accès, donc à une déperdition de ressources couteuses.

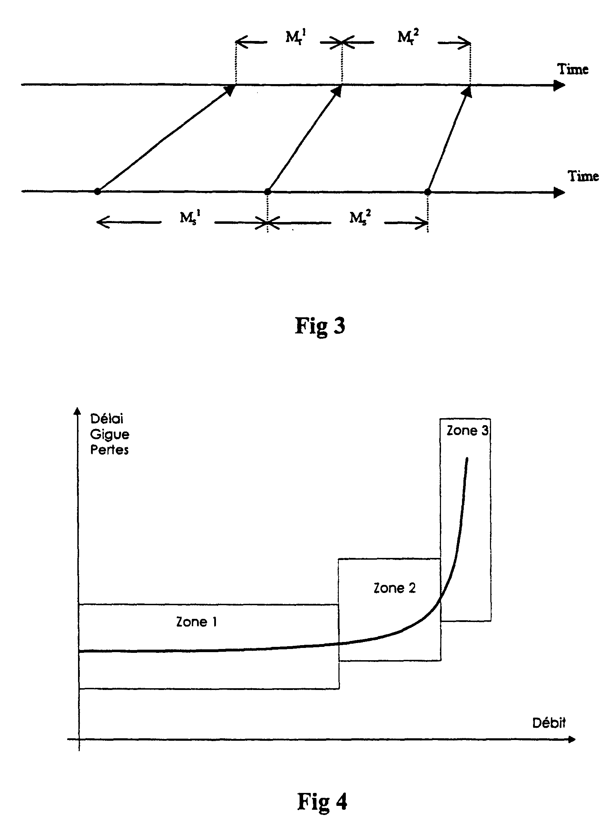

La figure 4 donne l'allure typique d'une telle fonction.

On identifie 3 zones :

Zone 1 : la qualité de service est relativement indépendante du débit ; l'accès n'est pas congestionné et il est probablement sous-utilisé.

Zone 2 : la qualité de service commence à se dégrader significativement avec le débit ; l'accès est en limite de congestion.

Zone 3 : la qualité de service se dégrade fortement pour une faible augmentation du débit. L'accès est congestionné.

Le point d'équilibre idéal est dans la zone 2 : fort débit d'accès et qualité de service contrôlée.

Le module M2 14 effectue périodiquement :

- un calcul d'une valeur pondérée entre les sources pour chacun des différents paramètres de qualité de service (délai pondéré, gigue pondérée, pertes pondérées);

- une détermination de la courbe des valeurs pondérées en fonction de la charge mesurée $D_{x,d}$. Cette recherche se fait à partir des mesures instantanées, et peut demander de faire varier la limite $L_{max,x,d}$ autour d'un point de fonctionnement provisoire, pour obtenir une meilleure visibilité sur les fonctions.

- une fixation d'une limite $L_{max,x,d}$ en fonction des courbes et de seuils paramétrables, notamment pour la qualité de service (par exemple délai maximum, ou perte maximum).

Si à un moment donné, le premier débit autorisé $L_{max,s,d}$ entre la source S et la destination D conduit à une dégradation des flux issus de cette source (par exemple parce que le réseau d'accès 6 de la source S vers le réseau de transit 4 rentre en congestion), cette source doit limiter son débit sous peine de dégradation de la qualité.

Il est donc nécessaire de trouver et d'adapter dynamiquement la limite pour le débit $D_{s,d}$ entre la source S et la destination D. C'est la fonction du module M3 16, mis en oeuvre dans chacune des sources.

Une méthode pouvant être utilisée pour le module M3 16 est similaire à celle décrite pour le module M2 14. On détermine des valeurs limites de débit vers chaque destination $L_{max,s,d}$, dans des limites données éventuellement par des réservations dynamiques de débit $R_{s,d}$ effectuées vers tout ou partie des destinations, des données statiques de configuration et le débit de la ligne d'accès. Ces valeurs limites de débit sont déterminées à partir de la courbe des valeurs de Qualité de Service vers chaque destination en fonction de la charge mesurée globalement $D_{s,x}$ et vers chaque destination $D_{s,d}$.

Un module M5 17 commande les moyens de classification 8 et les moyens de contrôle 10 du débit en fixant dynamiquement la valeur de limiteurs 10 de la source S en fonction des valeurs issues des modules M1 12 et M3 16.

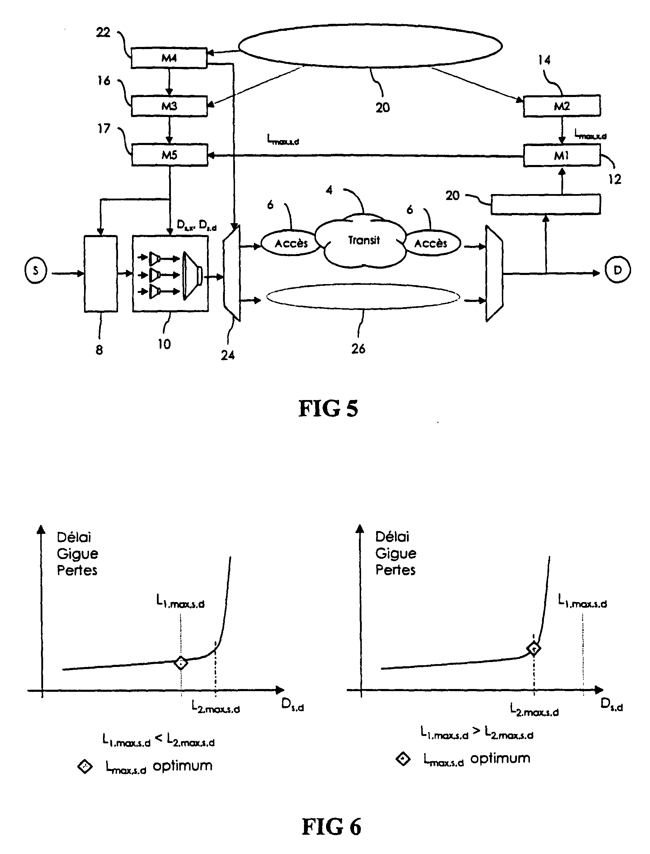

La figure 5 illustre un exemple de réseau dans lequel est mis en oeuvre le procédé.

La figure 6 donne un exemple de détermination de la limite du débit $L_{max,s,d}$ optimum en fonction du positionnement relatif de la limite $L_{2,max,s,d}$ déterminée par le module M3 16 et de la limite $L_{1,max,s,d}$ autorisée par le module M1 12.

Le choix du débit optimum dépend des objectifs de qualité de service pour les flux considérés.

La méthode peut aussi prendre en compte un critère global à l'émission de la source, en calculant une fonction pondérée des paramètres de Qualité de Service pour l'ensemble des flux à l'émission (en effet, si la congestion individuelle a lieu dans le réseau d'accès 6 au réseau de transit 4, tous les flux émis par la source y participent).

Dans ce cas, on recherche dans un premier temps quelle est la meilleure valeur pour la limite du débit global d'émission $L_{max,s,x}$, qui conduira à programmer un limiteur 10 global à l'émission, puis on réalise une recherche du meilleur débit vers chaque destination D $L_{max,s,d}$, qui conduira à programmer un limiteur 10 individuel pour les flux vers chaque destination.

La figure 5 illustre le procédé d'optimisation selon l'invention dans un réseau de transmission de flux de données en mode paquet.

Le dispositif destiné à mettre en oeuvre ce procédé comporte :

- des moyens 20 pour mesurer le délai absolu de transfert, la gigue, le débit des données échangées et les pertes entre chaque source S et chaque destination D;

- des moyens pour répartir, pour chaque destination D, le débit maximal $L_{max,x,d}$ entre les différentes sources ;

- des moyens pour déterminer dynamiquement, pour chaque destination D, la limite du point de congestion du réseau d'accès 6 optimisant le débit maximal $L_{max,x,d}$ ;

- des moyens pour déterminer dynamiquement pour chaque source S, la limite du point de congestion du réseau d'accès 6 globalement et vers chaque destination;

- des moyens pour déterminer, pour chaque source S, l'effet de la congestion du réseau de transit 4;

- des moyens de classification des paquets de données émis en fonction de leur destination et de la qualité de service requise ;

- des moyens de contrôle du débit ;

- des moyens de commande desdits moyens de classification et desdits moyens de contrôle ; et

- des moyens de sélection du réseau entre chaque source S et chaque destination D.

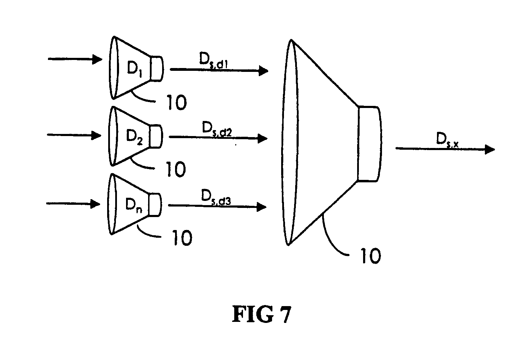

La figure 7 décrit un agencement de moyens de contrôle 10 de débit constitué par des limiteurs globaux et des limiteurs par destination en sortie de chaque source.

Le réseau de transit 4 a également un impact sur la qualité de service des flux entre sources et destinations. Par hypothèse, cette qualité n'est pas corrélée avec le débit des sources.

Cet impact varie dans le temps (par exemple en fonction du cycle d'activité des usagers : jour/nuit, heures de pointes, etc.), à une vitesse lente relativement à celle des phénomènes de congestion collective et individuelle.

Il est important de connaître la Qualité de Service intrinsèque au réseau de transit 4, notamment pour déterminer la meilleure Qualité de Service globale que l'on peut atteindre de Source à Destination, et pour affiner les résultats des modules M1 12, M2 14 et M3 16. La connaissance de cette qualité de service est fournie par un module M4 22, qui établit un diagnostic sur la qualité de service entre la source S et chaque destination Di de manière à commander le sélectionneur 24 pour orienter tout ou partie du trafic vers un autre réseau.

Comme la qualité de service finale ne peut excéder celle du réseau de transit, on a les cas suivants, par rapport à un objectif de qualité donné:

1. Qualité du transit suffisamment supérieure à l'objectif : les modules d'optimisation M1 12, M2 14 et M3 16 sont efficaces.

2. Qualité du transit inférieure ou trop proche de l'objectif : les modules d'optimisation M1 12, M2 14 et M3 16 ne suffisent pas pour atteindre cet objectif. Il faudra donc éventuellement prendre d'autres dispositions.

Dans le cas où la quantité de trafic à écouler, les méthodes d'optimisation, voire la qualité propre du réseau de transit 4, ne permettraient pas d'obtenir une qualité de service suffisante, on pourrait mettre en oeuvre d'autres réseaux 26 de communication entre sources et destinations en commandant le sélectionneur 24, par exemple :

- l'utilisation sur le même lien d'accès d'un service de meilleure qualité à prix supérieur ;
- un accès à un autre opérateur de service (à la place ou en plus du premier);
- une liaison directe (par exemple à travers le réseau téléphonique).

La connaissance précise de la qualité qu'il est possible d'obtenir permet ainsi de gérer les compromis qualité/prix selon des critères propres aux utilisateurs.

## Revendications

1. Procédé d'optimisation dynamique de la qualité de service dans un réseau de transmission de données (2) en mode paquet, ledit réseau (2) comportant une pluralité de sources Si et une pluralité de destinations Di reliées à un réseau de transit (4) via une pluralité de réseaux d'accès (6), chaque source étant susceptible d'envoyer un débit maximal $L_{max,s,x}$, et chaque destination étant susceptible de recevoir un débit maximal $L_{max,x,d}$, lesdites sources comportant chacune un moyen de classification (8) et de contrôle (10) du débit de données émis, procédé **caractérisé en ce qu'**il comporte les étapes suivantes :

    a- mesurer le délai absolu de transfert, la gigue, le débit desdites données échangées et les pertes entre chaque source S et chaque destination D, et effectuer les sous-étapes suivantes en fonction des mesures obtenues à cette étape a:

        a1- pour chaque destination D, répartir le débit maximal $L_{max,x,d}$ entre les différentes sources ;
        a2- pour chaque destination D, déterminer dynamiquement la limite du point de congestion du réseau d'accès (6) optimisant le débit maximal $L_{max,x,d}$ ;
        a3- pour chaque source S, déterminer dynamiquement la limite du point de congestion du réseau d'accès (6) optimisant le débit maximal global $L_{max,s,x}$ et le débit maximal vers chaque destination $L_{max,s,d}$ ;
        a4- pour chaque source S, déterminer l'effet de la congestion du réseau de transit (4) ; et

    b- commander les moyens de classification (8) et de contrôle (10) de débit en fonction des résultats des sous-étapes a1, a2, a3 et a4.

2. Procédé selon la revendication 1, **caractérisé en ce que** pour une destination D donnée, l'étape a1 comporte les opérations suivantes:

- fixer le débit $L_{max,x,d}$ à partir, d'une part, du débit de la ligne d'accès, et d'autre part, de l'étape a2 ;
- partager ledit débit maximal $L_{max,x,d}$ entre les sources actives de manière à définir pour chaque source une première valeur de débit maximal $L_{max,s,d}$, ledit partage étant effectué en tenant compte de données de configurations et d'éventuelles réservations dynamiques de débit $R_{s,d}$ par tout ou partie des sources.
- transmettre vers chacune des sources la dite première valeur $L_{max,s,d}$.

3. Procédé selon la revendication 1, **caractérisé en ce que** l'étape a2 comporte les opérations suivantes:

- Calculer une première valeur de débit représentant une pondération de débit entre chacune des sources et ladite destination;
- Calculer une première valeur de gigue représentant une pondération de gigue entre chacune des sources et ladite destination
- Calculer une première valeur de pertes représentant une pondération des pertes entre chacune des sources et ladite destination ;
- déterminer la courbe de ces valeurs pondérées en fonction du débit reçu par cette destination ;
- Fixer la valeur de débit maximal $L_{max,x,d}$ en fonction desdites courbes.

**4.** Procédé selon la revendication 1, **caractérisé en ce que** l'étape a3 comporte les opérations suivantes:

- Calculer une première valeur de débit représentant une pondération de débit entre ladite source et chacune desdites destinations;
- Calculer une première valeur de gigue représentant une pondération de gigue entre ladite source et chacune desdites destinations ;
- Calculer une première valeur de pertes représentant une pondération des pertes ladite source et chacune desdites destinations ;
- déterminer la courbe de ces valeurs pondérées en fonction du débit émis par ladite source ;
- Fixer une valeur de débit global maximal $L_{max,s,x}$ et une deuxième valeur de débit maximal par direction $L_{max,s,d}$ en fonction desdites courbes, du débit de la ligne vers le réseau d'accès, de données de configurations et d'éventuelles réservations dynamiques de débit $R_{s,d}$ vers tout ou partie des destinations.

**5.** Procédé selon l'une des revendications 1 à 4, **caractérisé en ce que**, pour chacune desdites destinations, l'étape a4 comporte les opérations suivantes:

- comparer les mesures de délais, gigue, pertes et débit et les résultats des étapes a1, a2 et a3 à des valeurs de délai, gigue, pertes et débit prédéfinies ;
- établir un diagnostic sur la qualité de service en fonction de cette comparaison.

**6.** Procédé selon l'une des revendications 1 à 5, **caractérisé en ce qu'**il comporte en outre une étape consistant à transmettre au moyen de contrôle 10 du débit, la plus petite valeur parmi lesdites première et deuxième valeurs de débit maximal $L_{max,s,d}$ ainsi que la valeur de débit global maximale $L_{max,s,x}$.

**7.** Dispositif d'optimisation dynamique de la qualité de service dans un réseau de transmission de données (2) en mode paquet, ledit réseau (2) comportant une pluralité de sources Si et une pluralité de destinations Di reliées à un réseau de transit (4) via une pluralité de réseaux d'accès (6), chaque source étant susceptible d'envoyer un débit maximal $L_{max,s,x}$, et chaque destination étant susceptible de recevoir un débit maximal $L_{max,x,d}$, lesdites sources comportant chacune un moyen de classification et de contrôle du débit de données émis, ledit dispositif étant **caractérisé en ce qu'**il comporte :

- des moyens pour mesurer le délai absolu de transfert, la gigue, le débit des données échangées et les pertes entre chaque source S et chaque destination D;
- des moyens pour répartir, pour chaque destination D, le débit maximal $L_{max,x,d}$ entre les différentes sources ;
- des moyens pour déterminer dynamiquement, pour chaque destination D, la limite du point de congestion du réseau d'accès (6) optimisant le débit maximal $L_{max,x,d}$;
- des moyens pour déterminer dynamiquement pour chaque source S, la limite du point de congestion du réseau d'accès (6) globalement et vers chaque destination;
- des moyens pour déterminer, pour chaque source S, l'effet de la congestion du réseau de transit (4);
- des moyens de classification des paquets de données émis ;
- des moyens de contrôle de débit, et
- des moyens de sélection du réseau pour chaque source vers chaque destination.

**8.** Dispositif selon la revendication 7, **caractérisé en ce qu'**il comporte en outre un module M1 (12), chargé de déterminer dynamiquement un premier débit maximum d'information $L_{max,s,d}$, qu'une source S peut envoyer vers une destination D, un module M2 (14), chargé de déterminer dynamiquement le débit maximum $L_{max,x,d}$ que la destination D peut recevoir pour avoir une utilisation optimale de la ligne d'accès tout en maîtrisant la Qualité de Service , un module M3 (16), chargé de déterminer dynamiquement le débit global maximum $L_{max,s,x}$ et un deuxième débit maximum $L_{max,s,d}$ que la source S peut émettre vers chaque D pour avoir une utilisation optimale de la ligne d'accès tout en maîtrisant la Qualité de Service, un module M4 (22), chargé de déterminer dynamiquement les caractéristiques du réseau de transit (4) et de commander un sélectionneur (24) de réseau et un module M5 (17), commandant les moyens de classification (8) et les moyens de contrôle (10) du débit en fixant dynamiquement la valeur de limiteurs (10) de la source S en fonction des valeurs issues des modules M1 (12) et M3 (16).

9. Dispositif selon la revendication 7, **caractérisé en ce que** les paramètres dynamiques en entrée du module M1 (12) sont:
les mesures de débit;

- des valeurs de réservation de débit $R_{s,d}$ entre chaque source S et la destination D ;
- la valeur maximale $L_{max,x,d}$ que la destination D peut recevoir de l'ensemble des sources Si, telle que déterminée par le module M2 (14).

10. Dispositif selon la revendication 7, **caractérisé en ce que** le module M2 (14) calcule, à partir des mesures de Qualité de Service, des variables de Qualité de Service pondérées entre toutes les sources Si et en déduit le débit maximum $L_{max,x,d}$ que la destination D peut recevoir du réseau (2).

11. Dispositif selon la revendication 8, **caractérisé en ce que** le module M3 (16) reçoit la première valeur $L_{max,s,d}$ du module M1 de chaque destination D et calcule, à partir des mesures de Qualité de Service, des variables de Qualité de Service pondérées entre toutes les destinations Di et fournit le débit maximum $L_{max,s,x}$ que la source S peut émettre vers le réseau (2) et les deuxièmes valeur de débit maximum $L_{max,s,d}$ que la source S peut émettre vers chaque destination D.

12. Dispositif selon la revendication 7, **caractérisé en ce que** le module M4 (22) établit un diagnostic sur la qualité de service entre la source S et chaque destination D de manière à commander le sélectionneur (24) pour orienter tout ou partie du trafic vers un autre réseau (26).

**Patentansprüche**

1. Verfahren zur dynamischen Optimierung der Dienstqualität eines im Paketmodus arbeitenden Datenübertragungsnetzwerks (2), wobei das genannte Netzwerk (2) eine Vielzahl von Quellen Si und eine Vielzahl von Zielen Di umfasst, die über eine Vielzahl von Zugangsnetzwerken (6) mit einem Übertragungsnetzwerk (4) verbunden sind, jede Quelle einen maximalen Bitstrom $L_{max,s,x}$ senden kann und jedes Ziel einen maximalen Bitstrom $L_{max,x,d}$ empfangen kann, jede der genannten Quellen eine Einrichtung zur Klassifizierung (8) und Kontrolle (10) des gesendeten Datenstroms umfasst, und dieses Verfahren dabei **dadurch gekennzeichnet ist, dass** es die folgenden Schritte umfasst:

a- Messen der absoluten Übertragungsverzögerung, des Jitters, der Menge der ausgetauschten Daten und der Verluste zwischen jeder Quelle S und jedem Ziel D, und Ausführen der nachfolgenden Teilschritte in Abhängigkeit von den in diesem Schritt a erhaltenen Messungen:

a1- für jedes Ziel D Aufteilung des maximalen Datenstroms $L_{max,x,d}$ zwischen den verschiedenen Quellen;
a2- für jedes Ziel D dynamische Bestimmung der Grenze des Überlastungspunkts des Zugangsnetzwerks (6) zur Optimierung des maximalen Datenstroms $L_{max,x,d}$;
a3- für jede Quelle S dynamische Bestimmung der Grenze des Überlastungspunkts des Zugangsnetzwerks (6) zur Optimierung des maximalen Gesamtdatenstroms $L_{max,s,x}$ und des maximalen Datenstroms in Richtung jedes Ziels $L_{max,s,d}$;
a4- für jede Quelle S Bestimmung der Auswirkung der Verstopfung des Übertragungsnetzwerks (4); und

b- Steuerung der Einrichtungen zur Klassifizierung (8) und Kontrolle (10) des Datenstroms in Abhängigkeit von den Teilschritten a1, a2, a3 und a4.

2. Verfahren nach Anspruch 1, **dadurch gekennzeichnet, dass** der Schritt a1 für ein bestimmtes Ziel D die folgenden Operationen umfasst:

- Festlegung des Datenstroms $L_{max,x,d}$ aufgrund von einerseits dem Datenstrom der Zugangsleitung und andererseits dem Schritt a2;
- Aufteilung des genannten maximalen Datenstroms $L_{max,x,d}$ zwischen den aktiven Quellen, um für jede Quelle einen ersten maximalen Datenstromwert $L_{max,s,d}$ zu definieren, wobei die genannte Aufteilung erfolgt, indem Daten von Konfigurationen und eventuellen dynamischen Datenstromreservierungen $R_{s,d}$ von allen oder einem Teil der Quellen berücksichtigt werden;
- Übertragung des genannten ersten Werts $L_{max,s,d}$ an jede der Quellen.

3. Verfahren nach Anspruch 1, **dadurch gekennzeichnet, dass** der Schritt a2 die folgenden Operationen umfasst:

- Berechnung eines ersten Datenstromwerts, der eine Datenstromgewichtung zwischen jeder der Quellen und dem genannten Ziel darstellt;
- Berechnung eines ersten Jitterwerts, der eine Jittergewichtung zwischen jeder der Quellen und dem genannten Ziel darstellt;

- Berechnung eines ersten Werts der Verluste, der eine Gewichtung der Verluste zwischen jeder der Quellen und dem genannten Ziel darstellt;
- Bestimmung der Kurve dieser gewichteten Werte in Abhängigkeit von dem durch dieses Ziel empfangenen Datenstrom;
- Festlegung des maximalen Datenstromwerts $L_{max,x,d}$ in Abhängigkeit von den genannten Kurven.

4. Verfahren nach Anspruch 1, **dadurch gekennzeichnet, dass** der Schritt a3 die folgenden Operationen umfasst:

- Berechnung eines ersten Datenstromwerts, der eine Datenstromgewichtung zwischen jeder der Quellen und jedem der genannten Ziele darstellt;
- Berechnung eines ersten Jitterwerts, der eine Jittergewichtung zwischen jeder der Quellen und jedem der genannten Ziele darstellt;
- Berechnung eines ersten Werts der Verluste, der eine Gewichtung der Verluste zwischen jeder der Quellen und jedem der genannten Ziele darstellt;
- Bestimmung der Kurve dieser gewichteten Werte in Abhängigkeit von dem durch diese Quelle gesendeten Datenstrom;
- Festlegung eines Maximalwerts des Gesamtdatenstroms $L_{max,s,x}$ und eines zweiten Maximalwerts des Datenstroms pro Richtung $L_{max,s,d}$ in Abhängigkeit von den genannten Kurven, des Datenstroms der Leitung in Richtung Zugangsnetzwerk, von Daten von Konfigurationen und eventuellen dynamischen Datenstromreservierungen $R_{s,d}$ in Richtung eines Teils oder aller Ziele.

5. Verfahren nach einem der Ansprüche 1 bis 4, **dadurch gekennzeichnet, dass** für jedes der genannten Ziele der Schritt a4 die folgenden Operationen umfasst:

- Vergleichen der Verzögerungs-, Jitter-, Verluste- und Datenstrommessungen und der Resultate der Schritte a1, a2 und a3 mit vorher definierten Verzögerungs-, Jitter-, Verluste- und Datenstromwerten;
- Erstellen einer Diagnose bezüglich der Dienstqualität in Abhängigkeit von diesem Vergleich.

6. Verfahren nach einem der Ansprüche 1 bis 5, **dadurch gekennzeichnet, dass** es außerdem einen Schritt umfasst, der darin besteht, von den Datenstrom-Maximalwerten $L_{max,s,d}$ - das heißt dem ersten und dem zweiten -, der Datenstrom-Kontrolleinrichtung (10) den kleineren dieser Werte sowie den Maximalwert des Gesamtdatenstroms $L_{max,s,x}$ zu senden.

7. Vorrichtung zur dynamischen Optimierung der Dienstqualität eines im Paketmodus arbeitenden Datenübertragungsnetzwerks (2), wobei das genannte Netzwerk (2) eine Vielzahl von Quellen Si und eine Vielzahl von Zielen Di umfasst, die über eine Vielzahl von Zugangsnetzwerken (6) mit einem Übertragungsnetzwerk (4) verbunden sind, jede Quelle einen maximalen Bitstrom $L_{max,s,x}$ senden kann und jedes Ziel einen maximalen Bitstrom $L_{max,x,d}$ empfangen kann, jede der genannten Quellen eine Einrichtung zur Klassifizierung und Kontrolle des gesendeten Datenstroms umfasst, und dieses Vorrichtung dabei **dadurch gekennzeichnet ist, dass** sie umfasst:

- Einrichtungen zum Messen der absoluten Übertragungsverzögerung, des Jitters, der Menge der ausgetauschten Daten und der Verluste zwischen jeder Quelle S und jedem Ziel D;
- für jedes Ziel D Einrichtungen zum Aufteilen des maximalen Datenstroms $L_{max,x,d}$ zwischen den verschiedenen Quellen;
- für jedes Ziel D Einrichtungen zur dynamische Bestimmung der Grenze des Übenastungspunkts des Zugangsnetzwerks (6) zur Optimierung des maximalen Datenstroms $L_{max,x,d}$;
- für jede Quelle S Einrichtungen zur dynamische Bestimmung der Grenze des Überlastungspunkts des Zugangsnetzwerks (6), global und in Richtung jedes Ziels;
- für jede Quelle S Einrichtungen zur Bestimmung der Auswirkung der Verstopfung des Übertragungsnetzwerks (4);
- Einrichtungen zur Klassifizierung der gesendeten Datenpakete;
- Einrichtungen zur Kontrolle der Bitrate bzw. des Datenstroms, und
- Einrichtungen zur Netzwerkselektion von jeder Quelle zu jedem Ziel.

8. Vorrichtung nach Anspruch 7, **dadurch gekennzeichnet, dass** sie außerdem einen Modul M1 (12) umfasst, fähig dynamisch einen ersten maximalen Informations- bzw. Datenstrom $L_{max,s,d}$ zu bestimmen, den eine Quelle S einem Ziel D senden kann, einen Modul M2 (14) umfasst, fähig dynamisch den maximalen Datenstrom $L_{max,x,d}$ zu bestimmen, den das Ziel D bei optimaler Nutzung der Zugangsleitung und Aufrechterhaltung der Dienstqualität empfangen kann, einen Modul M3 (16) umfasst, fähig dynamisch den Gesamtdatenstrom $L_{max,s,x}$ und einen zweiten maximalen Datenstrom $L_{max,s,d}$ zu bestimmen, den eine Quelle S einem Ziel D senden kann, bei optimaler Nutzung der Zugangsleitung und Aufrechterhaltung der Dienstqualität, einen Modul M4 (22), fähig dynamisch die Charakteristika des Übertragungsnetzwerks (4) zu ermitteln und einen Netzwerkselektor (24) zu steuern, und einen Modul M5 (17) umfasst, der die Ktassifizierungseinnchtungen (8) und die Kontrolleinrichtungen (10) des Datenstroms steuert, indem er dynamisch den Wert von Begrenzem (10) der Quelle S in Abhängigkeit von den Werten festlegt, die von den Modulen M1 (12) und M3 (16) stammen.

9. Vorrichtung nach Anspruch 7, **dadurch gekennzeichnet, dass** die dynamischen Parameter am Eingang des Moduls M1 (12) die folgenden sind:

   - die Bitraten- bzw. Datenstrommessungen;
   - Bitraten- bzw. Datenstromreservierungswerte $R_{s,d}$ zwischen jeder Quelle S und dem Ziel D;
   - der Maximalwert $L_{max,x,d}$, den das Ziel D von der Gesamtheit der Quellen Si empfangen kann, wie festgelegt durch den Modul M2 (14).

10. Vorrichtung nach Anspruch 7, **dadurch gekennzeichnet, dass** der Modul M2 (14) aufgrund der Dienstqualitäts-Messungen zwischen allen Quellen Si gewichtete Dienstqualitäts-Variable berechnet und davon den maximalen Datenstrom $L_{max,x,d}$ ableitet, den das Ziel D von dem Netzwerk (2) empfangen kann.

11. Vorrichtung nach Anspruch 8, **dadurch gekennzeichnet, dass** der Modul M3 (16) den ersten Wert $L_{max,s,d}$ des Moduls M1 von jedem Ziel D empfängt und aufgrund der Dienstqualitäts-Messungen zwischen allen Zielen Di gewichtete Dienstqualitäts-Variable berechnet und das Datenstrom-Maximum $L_{max,s,x}$ liefert, das die Quelle S in Richtung Netzwerk (2) senden kann, und den zweiten maximalen Datenstromwert $L_{max,s,d}$ empfängt, den die Quelle S an jedes Ziel D senden kann.

12. Vorrichtung nach Anspruch 7, **dadurch gekennzeichnet, dass** der Modul M4 (22) eine Diagnostik bezüglich der Dienstqualität zwischen der Quelle S und jedem Ziel D erstellt, um den Selektor (24) so zu steuern, dass der Datenverkehr ganz oder teilweise in ein anderes Netzwerk (26) geleitet wird.

## Claims

1. Dynamic optimization process of quality service in a data transmission packet network (2), where said network (2) consists of a multitude of sources Si and a multitude of destinations Di connected to a transit network (4) via a multitude of access networks (6), where each source is capable of sending a maximum output $L_{max,a,x}$ and each destination is capable of receiving a maximum output $L_{max,x,d}$, where said sources each consist of a classification (8) and a control (10) means for the output of transmitted data, a process **characterized in that** it includes the following stages:

   a. measuring the absolute transfer delay period, the jitter, the output of said exchanged data and the losses between each source S and each destination D, and performing the following sub-stages depending on the measures obtained during this stage a:

   a1. for each destination D distributing the maximum output amongst the different sources,
   a2. for each destination D, determining dynamically the access network congestion point (6) limit that optimizes the maximum output $L_{max,x,d}$,
   a3. for each source S, determining dynamically the access network congestion point (6) limit that optimizes the overall maximum output $L_{max,s,x}$ and the maximum output towards each destination $L_{max,s,d}$,
   a4. for each source S, determining the impact of the transit network congestion (4), and

   b. monitoring the classification (8) and control (10) means of the output depending on results from the sub-stages a1, a2, a3 and a4.

2. Process according to claim 1, **characterized in that** for a given destination D, stage a1 consists of the following operations:

   - setting the maximum output $L_{max,x,d}$ according to the output of the access line on the one hand, and stage a2, on the other,
   - sharing said maximum output $L_{max,x,d}$ amongst the active sources of the subnetwork so as to define a first value of maximum output $L_{max,s,d}$ for each source, where said sharing is done by taking configuration data and possible dynamic output reservations $R_{s,d}$ into account by all or some sources,
   - transmitting the first value $L_{max,s,d}$ toward each source.

3. Process according to claim 1, **characterized in that** stage a2 consists of the following operations:

   - calculating a first delay period value representing a delay period weighting between each source and said destination,
   - calculating a first jitter value representing a jitter weighting between each source and said destination,

- calculating a first loss value representing a loss weighting between each source and said destination,
- determining the curb of weighted values according to the output received by this destination,
- setting a maximum output $L_{max,x,d}$ value according to said curbs.

4. Process according to claim 1, **characterized in that** the stage a3 consists of the following operations:

- calculating a first delay period value representing a delay period weighting between said source and each said destination,
- calculating a first jitter value representing a jitter weighting between said source and each said destination,
- calculating a first loss value representing a loss weighting between said source and each said destination,
- determining the curb of weighted values depending on the output transmitted by said source (overall and towards each destination),
- determining an overall maximum output $L_{max,s,x}$ value and a second maximum output value by direction $L_{max,s,d}$ are set in relation to said curbs, output from line towards access network, configuration and data and possible dynamic reservations of output $R_{s,d}$ towards all or some destinations.

5. Process according to any one of the claims 1 to 4, **characterized in that**, for each said destination, stage a4 consists of the following operations:

- Comparing the measures of delay period, jitter, loss and output and the results from stages a1, a2 and a3 with predefined values of delay period, jitter, loss and output.
- Establishing a diagnosis on the quality service in relation to this comparison.

6. Process according to one of claims 1 to 5 **characterised in that** it further includes a stage consisting in transmitting, through the output control means 10, the smallest value amongst said first and second values of maximum output $L_{max,s,d}$ as well as the overall maximum output value $L_{max,s,x}$.

7. Dynamic optimisation device of quality service in a data transmission packet network (2), where said network (2) consists of a multitude of sources Si and a multitude of destinations Di connected to a transit network (4) via a multitude of access networks (6), where each source is capable of sending a maximum output $L_{max,s,x}$ and each destination is capable of receiving a maximum output $L_{max,x,d}$, where said sources each consist of a classification and a control means for the output of transmitted data, where said device is **characterised in that** it consists of the following:

- Means to measure the absolute delay period of transfer, the jitter, the output of exchanged data and losses between each source S and each destination D.
- Means to distribute the maximum output $L_{max,x,d}$ amongst the different sources for each destination D.
- Means to dynamically determine the limit congestion point of the access network (6) by optimising the maximum output $L_{max,x,d}$ for each destination D.
- Means to dynamically determine the limit congestion point of the overall access network (6) and towards each destination for each source S.
- Means to determine the impact of congestion in the transit network (4) for each source S.
- Means to classify data packets transmitted.
- Means to control output.
- Means of choosing the network for each source S towards each destination D.

8. Device according to claim 7, **characterised in that** it further comprises a module M1 (12), responsible for dynamically determining a first maximum information quantity $L_{max,s,d}$ that a source S may send to a destination D, a module M2 (14), responsible for dynamically determining the overall maximum output $L_{max,x,d}$ that destination D may receive to have optimum use of the access line whilst monitoring Quality Service, a module M3 (16), responsible for dynamically determining the overall maximum output and **in that** source S may transmit by destination to have an optimum use of the access line whilst monitoring Quality Service, a module M4 (22), responsible for determining the characteristics of the transit network (4) and to order a network selector (24), and a module M5 (17) for monitoring the classification (8) and control (10) means of output by dynamically setting the limiters' value (10) of source S in relation to values from modules M1 (12) and M3 (16).

9. Device according to claim 7 **characterised in that** dynamic entry parameters of module M1 (12) are as follows:

Output flow measures.

- Values of output flow reservation $R_{s,d}$ between each source S and destination D.

    -  The maximum value $L_{max,x,d}$ that destination D may receive from all sources Si, as determined by module M2 (14).

**10.** Device according to claim 7 **characterised in that** module M2 (14) calculates, by using measures of Quality Service, the Quality Service weighted variables between all sources Si and deduces the maximum output $L_{max,x,d}$ that destination D may receive from the network (2).

**11.** Device according to claim 8 **characterised in that** module M3 (16) receives the first value $L_{max,a,x}$ from module M1 of each destination D and calculates, by using measures of Quality Service, the Quality Service weighted variables between all destinations Di and provides the maximum output $L_{max,a,x}$ that source S may transmit to the network (2) and the second maximum output values $L_{max,s,d}$ that source S may transmit to each destination D.

**12.** Device according to claim 7 **characterised in that** module M4 (22) establishes a diagnosis on the quality service between the source S and each destination D so as to monitor the selector (24) that directs all or some of the traffic to another network (26).

**Fig 1**

| Usager | Accès | | | | Transit |
|---|---|---|---|---|---|
| CPE | Local Loop | TELCO | IAP | ISP | Carrier |

**Fig 2**

**Fig 3**

**Fig 4**

**FIG 5**

$L_{1,max.s.d} < L_{2,max.s.d}$

◇ $L_{max.s.d}$ optimum

$L_{1,max.s.d} > L_{2,max.s.d}$

◇ $L_{max.s.d}$ optimum

**FIG 6**

**FIG 7**